(19) Europäisches Patentamt

European Patent Office

Office européen des brevets

(11) **EP 1 214 196 B1**

(12) **EUROPEAN PATENT SPECIFICATION**

(45) Date of publication and mention
of the grant of the patent:
**07.05.2003  Bulletin 2003/19**

(51) Int Cl.⁷: **B32B 27/34**, B32B 27/32,
B65D 65/40

(21) Application number: **00949305.7**

(22) Date of filing: **11.07.2000**

(86) International application number:
**PCT/EP00/06567**

(87) International publication number:
**WO 01/003922 (18.01.2001 Gazette 2001/03)**

(54) **A MULTILAYER HEAT-SHRINKABLE PLASTIC FILM WITH BARRIER CHARACTERISTICS**

HEISSSCHRUMPFBARE MEHRSCHICHTIGE KUNSTSTOFFFOLIE MIT
BARRIEREEIGENSCHAFTEN

FILM EN PLASTIQUE THERMORETRECISSABLE MULTICOUCHES A EFFET BARRIERE

(84) Designated Contracting States:
**AT BE CH CY DE DK ES FI FR GB GR IE IT LI LU
MC NL PT SE**

(30) Priority: **14.07.1999  IT  MI991553**

(43) Date of publication of application:
**19.06.2002  Bulletin 2002/25**

(73) Proprietor: **Tecno Coating Engineering S.r.l.
28040 Marano Ticino, (NO) (IT)**

(72) Inventors:
• **ZANELLA, Marco
I-21040 Venegono Superiore (IT)**
• **GINI, Alessandro
I-28047 Oleggio (IT)**
• **PRANDI, Paolo
I-28050 Pombia (IT)**

(74) Representative: **Gervasi, Gemma, Dr.
NOTARBARTOLO & GERVASI Srl,
Corso di Porta Vittoria, 9
20122 Milano (IT)**

(56) References cited:
**EP-A- 0 288 972      EP-A- 0 457 598
EP-A- 0 465 931      EP-A- 0 758 675
DE-A- 19 530 952    US-A- 5 763 095**

Remarks:
The file contains technical information submitted
after the application was filed and not included in this
specification

**Description**

Field of the invention

The present invention concerns a biaxially oriented multilayer heat-shrinkable plastic film with barrier characteristics to gases and of high mechanical resistance.

Prior art

The use of heat-shrinkable plastic film has been known for some time in the packing of perishable food and non-food products, such film comprising of one or more layers, at least one of which having barrier properties to oxygen.

Recent times have seen a huge increase in the sale of products, through distribution chains and supermarkets, especially concerning foodstuffs and single portion packed convenience foods.

Practical examples include all portioned convenience foods, like pre-cooked and raw products such as meats, fish, cheeses, pasta, perishable sweets etc.

Suitable packing materials for this purpose must satisfy the following criteria:

•    preserve the products for a certain length of time,
•    be practical and easily obtainable by using automatic and fast packing systems if possible,
•    be inexpensive,
•    maintain product visibility.

Heat-shrinkable barrier films satisfy all these criteria.

For example the 3-layer heat shrinkable and symmetrical film, made from the co-polymers Ethylene-Vinyl Acetate (EVA) and Poly-Vinylidene Chloride (PVDC), has been used for many years, particularly for the industrial packing of products, namely fresh and frozen meat, processed meat, sausages and pork products in general, cheeses, poultry, fish etc...

The main characteristics of this film, which is usually used in bag form are:

•    A barrier to oxygen of 15 to 50 ml/24 hr. m2 atm.,
•    A barrier to water vapour equal to or less than 1g./24 hr. m2.
        Both values refer to a total thickness of approx. 35 micrometres.
•    Heat shrinkage >35% at 90°C in both directions (lengthwise and crosswise),
•    Good layer adhesion, which increases the seal strength,
•    Transparency.

The aforesaid properties give packed products extended preservation, due to the barrier to gases, in addition to excellent presentation due to the film retracting onto the product itself.

Such films are obtained by known multi-layer coextrusion processes and subsequent bi-axial orientation using the so-called double or triple bubble system.

With such a system, the film molecules are heat stretched and "frozen" in a metastable condition. In fact, as soon as the film is subjected to temperatures approaching those at which stretching occurs, the molecular structure tends to return to its previous state, prior to stretching, by retracting on itself.

It is also known, in some cases, that film which is biaxially oriented by the double bubble process can also be partially or totally stabilised to remove at least a certain percentage of retraction from it, leaving unaltered the best mechanical properties resulting from stretching.

This outcome could be obtained in-line by controlled heating of the film, for example by inflation and the appropriate heating of a third bubble (by the triple bubble process). Alternatively, such stabilisation could also be obtained off-line by passage through a suitable stabilisation furnace.

Both the temperature at which the film is positioned, and the orientation percentage are typical of the polymers used.

The orientation temperature is also that at which the film starts its retraction during the application stage.

Instead the same retraction percentage in the two lengthwise (MD) and crosswise (TD) directions generally depends on the orientation ratio (or the second bubble inflation ratio compared to the first X ratio of lengthwise stretching).

Normally, in the cases treated, the stretch ratio is symmetrical and equal in both MD and TD directions.

As mentioned above, both the stretch temperature and ratio depend on the polymers used and their combination in the different structures.

For example, in the case mentioned of the 3-layer 8-10%/EVA plasticized EVA/PVDC film, the orientation temperature is close to 60°C and the film begins to retract at this temperature until reaching 35-40% of retraction at around 90°C.

The stretch ratio in the two directions is approximately 1: 4.

Instead, in the case of a monolayer structure of just PVDC with the same percentage of plasticizer, the orientation temperature is approximately 70°C and the stretch ratio is about 1:3.

This means that the bi-positioned monolayer PVDC film has a higher initial retraction temperature compared to the 3-layer film with EVA, and a lower retraction percentage (30% max. at 95°C).

In order to improve some characteristics of the EVA/PVDC/EVA structure, a system using radiation has been introduced for the cross-linking of polymers forming the same structure.

This process is normally performed in-line on double bubble systems that allow the attainment of EVA/PVDC/ EVA type structures or linear low density polyethylene (LLDPE)/Adhesive/PVDC/Adhesive/LLDPE resulting in:

- greater mechanical resistance (to piercing and abrasion),
- improved heat shrinkage characteristics,
- high seal strength.

For example, the American patent USP 3,821,182 (William G. Baird et al, June 1974) claims that it is possible to improve the heat shrinkage characteristics of an LLDPE/Adhesive/PVDC/Adhesive/LLDPE structure by cross-linking the LLDPE layers by radiance. Such action also improves the mechanical characteristics of the film.

The European patent EP 0 287 403 (Steven B. Garland, October 1988) claims the attainment of easier orientation for a coextruded multilayer film structure, including LLDPE or LDPE (low density polyethylene) as external layers and a PVDC layer (commercial name: Saran) as a barrier layer.

This better orientation is obtained by the synergetic effect of physical cross-linking of the polyolefine layers by ionogenic radiation combined with chemically obtained cross-linking. The chemical cross-linking is obtained by the addition of an organic peroxide called 2,5- dimethyl-2,5 bis (ter-butyl peroxy) hexane (DBH) to the polyolefine layers.

The results gained in this way are such as to increase the orientation speed of the film during the process, leading to an evident increase in productivity. An indirect consequence of this fact makes it possible to decrease the heat shrinkage temperature during the application stage and/or increase the same heat shrinkage percentage.

The European patent EP 0 322 196 (Thomas C. Warren, December 1988) in a wholly identical way, claims an increased orientation speed for a structure of the EVA type/Blend of polyolefine, namely VLDPE+EBA/PVDC/EVA in which VLDPE = linear very low density polyethylene

EBA= co-polymer Ethylene - Butyl Acrylate

Such a result is obtained by adding a so-called "pro-rad" agent (e.g. a tri-allyl cyanide TAC) to the polyolefine layer and subjecting the same structure to ionogenic radiation.

Recently, vinyl based polymers (PVC and PVDC) have gradually been replaced by other polymers, especially in food packing.

The Australian Patent AU A 46149/ 93 (Solomon Bekele, September 1993) concerns a coextruded structure of heat shrinkable film barrier of the type:

EVA+LLDPE/ LLDPE+ EVA/Adhesive/EVOH/Adhesive/ LLDPE+ EVA/ EVA+

LLDPE

Usually the films based exclusively on EVOH cannot be oriented with the double bubble system, or only partially so, with stretch ratios not exceeding 1: 2.5 (dependent on the type of EVOH considered).

The patent claims that using this type of structure makes it possible to achieve an expansion ratio of between 1: 3 and 1: 4 in both MD and TD directions (lengthwise and crosswise) and, in any event, that the MDXTD product is equal to 12.

That involves the attainment of a heat shrinkage percentage equal to that of PVDC and the same barrier properties along with the absence of chlorinated compounds.

Alternative barrier polymers to EVOH are the polyamides (PA) available in different types and morphologies. Generally, the barrier characteristics of PA are slightly less than those of EVOH.

The U.S. patent USP 5,077,109 (Stanley Lustig et al., March 1990) provides a structure of type:

LLDPE/Adhesive resin/PA/Adhesive resin/LLDPE

in which PA is an amorphous type 6I/6T Nylon. The innovation consists of the fact that it is possible to coextrude and bubble position two different polymers, namely PA and LLDPE, of which Polyamide has a glass transition temperature (Tg) of 127°C hence higher than the same melting point of the linear low density Polyethylene, which melts at around 120°C.

However the product is cross-linked by radiance prior to stretching.

Nevertheless, it is known that considerable problems are experienced in positioning multilayer structures made of polymers with very different melting points using the double bubble system. Hence, in the above patent, cross-linking is provided by means of radiance. It is clear that the introduction of this technique gives rise to considerable complications regarding the equipment and process.

In addition, it should be noted that Polyamides have a stretch ratio of less than 1:4 whereas, for many uses it is felt necessary to prepare films with high barrier properties to oxygen and to carbon dioxide and a higher stretch ratio.

Summary

Presently it has been discovered that the problems of the known technique are overcome by the multilayer heat-shrinkable not cross-linked plastic film with barrier characteristics, of the present invention, in which the various layers are arranged according to the structure A/B/C/D/C/B/A, which is characterised in that:

- the core layer D is made by a semi-aromatic and amorphous copolyamide resin or by a blend of copolyamides and amorphous polyamides;
- the C layers consist of adhesive resins;
- the B layers consist of a blend of co- and ter-polymers of polypropylene or of an LLDPE blend with other alpha-olefines or with EVA or of a heterophasic nucleated ethylene-propylene copolymer, and
- the A layers consist of a blend of co- and ter-polymers of polypropylene or blends of these, different to the B layer types, with suitable additives or of a heterophasic nucleated ethylene-propylene copolymer, it being possible to reduce said structure to five layers by the elimination of the B layers, or brought up to nine layers by inserting an A' layer, with the polymeric composition of A, between A and B.

Said film is obtained by the coextrusion and stretching of the primary tubular in lengthwise and crosswise directions using the double bubble process.

The film obtained, if heated to a temperature approaching that of stretching, tends to return to its original dimensions.

Presently we have surprisingly found that a film with a structure of the type illustrated above, obtained by the procedure described, results in a product which can be easily oriented, with an unexpectedly high stretch percentage and hence of retraction, compared to similar products.

Besides, such film has high barrier properties to oxygen and to carbon dioxide and high mechanical resistance.

These characteristics are obtained without it being necessary to subject the primary tubular to ionogenic radiation that brings about its cross-linking. Due to the characteristics of the product, such a film could be used in both wrapping film and sealed bag forms.

In both cases this film will wrap the article to be packed during packing and protect it, as a result of its barrier to oxygen and mechanical resistance properties.

Detailed description of the invention

The preferred structural form of the multilayer heat-shrinkable film with barrier characteristics, according to the present invention, is of the seven layer. symmetrical type arranged as follows: A/B/C/D/C/B/A.

The D layer consists of polyamides and forms the barrier layer; the C layers consist of tackiness polymers; the B layers consist of a blend of co- and ter-polymers of polypropylene or a blend of LLDPE with other alpha olefines or EVA; the A layers consist of a blend of co- and ter- polypropylene polymers, different to the B layers, with suitable additives.

An alternative nine layer structure may consist of A/A'/B/C/D/C/B/A'/A in which A' represents a material corresponding to A, but not containing the additives generally required in a surface layer (for example sliding, anti-static and anti-condensate agents etc.).

The core layer D is preferably made by a special type of polyamide known under the name Grivory G 21® produced by the company EMS. This product is a semi-aromatic and amorphous copolyamide having high oxygen barrier properties also in environment with high relative humidity. Grivory G 21® has a glass transition temperature (Tg) of 125°C.

Alternatively, the D layer can be made up of blends of amorphous Polyamides and co-polyamides with melting points of between 190 and 240°C.

The intermediate and outer layers, A and B, consist of two different blends of PP co- and ter-polymers, generally having a melting point of between 135 and 140°C or of a heterophasic nucleated ethylene-propylene copolymer.

Alternatively, the B layers could consist of LLDPE by itself or mixed with other alpha- olefines or with EVA. The melting point of LLDPE in this case is approximately 120°C.

The C layers, consist of extrudable resin blends having the feature of bonding different polymers (tackiness polymers) between them. The melting point of these resins is usually near to that of at least one of the two polymers to be bonded between them. In particular, the adhesives used have a melting point of approximately 130°C.

An alternative structure includes five layers of A/C/D/C/A type, in which A, C and D are as defined above. The specialist in this field generally knows it is extremely difficult to position multilayer film, with the double bubble system, composed of polymers with very different melting points, as in the present case.

In addition, from the known technique, it is known that Polyamides have a stretch ratio of less than 1: 4.

The process to obtain the film, according to the invention, consists in extruding a primary tubular made up of various layers, which is water cooled upon its exit from the extrusion head and then heated in suitable ovens with infrared radiation heating elements. Upon reaching a certain temperature the tubular is inflated with compressed air and stretched in two directions: lengthwise or machine direction (MD) due to the stretch induced by two pulling couples which rotate at different speeds upstream and downstream of the same bubble and in a crosswise direction (TD) due to inflation of the same tubular to greater dimensions (second bubble).

In a more particular way the infrared radiators ovens are divided into different heating zones in such a way to produce a temperature gradient profile. Such temperature profile is matching the stretching temperatures typical of each material composing the multilayer structure. Infrared sensing devices located in different positions accurately measure the actual temperature reached by the primary tube with a precision of +/- 1°C. A suited temperature profile distributed along the oven allows to obtain different orienting temperatures associated with each composing layer.

In this way by using the typical process of the stress induced orientation through the bubble system, it is possible to partially stretch the polymer having the highest orientation temperature. In the meantime the other polymers composing the structure, being heated at higher temperature than required for their orientation, are subjected to a viscous flow rather than to the build up of internal tensions and molecules orientation.

In the further steps, following the decreasing temperatures profile and due to the lower orienting temperature of the other layers, the orienting conditions of a second polymer having a lower orientation temperature are reached.

This procedure is applied in different steps to the different polymers composing the multilayer structure. By proceeding in this way at the end of the process it is possible to achieve the maximum orientation ratio for each composing layer.

According to the present invention the temperature gradient set in the different zones of the orientation oven is:

zone 1: 400°C/zone 2: 360°C/zone 3: 250°C/zone 4: 150°C/zone 5: 100°C.

The corresponding temperatures measured on the film in the different zones are:

zone 1: 138°C/zone 2: 138°C/zone 3: 120°C/zone 4: 75°C/zone 5: 70°C.

The stretch ratio, both in lengthwise and crosswise directions is between 1: 5 and 1: 6.

The thickness of the primary tubular is between 300 and 1300µm and the finished film thickness is between 15 and 60µm with a thickness ratio in the A/B/C/D/C/B/A structure corresponding to:

each layer A between 10 and 30%, each layer B between 10 and 30%, each layer C between 5 and 10% and layer D between 5 and 30% of the total thickness.

We unexpectedly found that the films according to the present invention can be easily oriented on a double bubble line having the above mentioned features, thus achieving a film product with high barrier properties to oxygen and carbon dioxide, shrink properties and good mechanical strenght.

Typical stretch ratios for said films are greater than 1:5 in both lengthwise and crosswise directions. Moreover, these results are obtained without it being necessary to subject the primary tubular to radiance in order to achieve sufficient molecule cross-linking.

As is known to the skilled in the field, the main effects of cross-linking are:

- the effect of helping stretching on the primary tubular and of stabilising the second bubble, also at low orientation temperatures, thus increasing film retraction;
- the effect of generally increasing mechanical resistance in the finished film and, particularly, piercing and tear resistance.

In a more particular way we found that a film based on the coextrusion of the following polymers: Polypropylene ter-polymer / Heterophasic nucleated Ethylene-propylene co-polymer / adhesive resin / Semi-aromatic amorphous copolyamide / adhesive resin / Heterophasic nucleated ethylene-propylene copolymer / polypropylene ter-polymer, biaxially oriented with the double bubble system, shows high characteristics of retraction, good mechanical resistance, particularly to piercing and tearing, even with values exceeding those of radiated films, and good barrier to oxygen properties; In particular, the high retraction values are determined by the fact that the aforesaid film allows stretch ratios > 5, unusual for a product containing Polyamide. Furthermore, according to the known technique, adequate resistance to piercing and tearing, as required for various applications, is only obtained by cross-linking the film by radiance.

In the present description, the term co-polymer of Polypropylene (EPC) is used to define a Polypropylene polymer modified with ethylene groups randomly set in the structure by the Ziegler Natta catalysis process. The percentage of ethylenic groups is between 2 and 6. The main characteristics of this EPC type are:

- density between 0.895 and 9.0 g/ cm$^3$,
- melting index between 5 and 6 g/ 10 min. (230°C/ 2.16kg),
- melting point of between 130 and 135°C.

Examples of EPC types are Moplen EP 2 C 37 F® (Montell) and Eltex P KS 400® (Solvay).

The term ter-polymer of Polypropylene (EPB) is used to define a product obtained from the polymerization of Propylene with lesser quantities of Ethylene and Butylene-1. This process could be performed at the gaseous stage or using a catalysis which results in the preparation of a product known as "catalloy." Typical characteristics of an EPB terpolymer are:

- density between 0.890 and 0.895 g/cm$^3$,
- melt index between 5 and 5.5 g/10 min. (230°C/ 2.16kg),
- melting point of approx. 135°C,

Examples of EPB types are Adsyl 5 C 37 F® (Montell) and Eltex P KS 300® (Solvay).

As used herein, the term "Heterophasic nucleated ethylene-propylene copolymer" refers to a polymer resulting from the polymerization of a polyolefine by the catalysis process. The content of ethylene-propylene di-monomer is included between 8 and 15% and more.

Typical properties of the heterophasic ethylene-propylene copolymers for film production are:

- specific gravity between 0.890 and 0.895 g/cm$^3$
- melt index between 0.6 and 6.0 g/19 min (230°C/2.16 kg)
- Vicat softening point between 50 and 90°C.

As used herein the term "semi-aromatic and amorphous copolyamide" refers to a copolymer the structure of which includes both the linear aliphatic units used to produce polyamide 6, polyamide 12 and other copolyamides, and some ring aromatic linear component. As a result of this particular composition and in contrast with semi-crystalline products, such polymers result to be semi-aromatic copolyamides and amorphous thermoplastic products.

Example of semi-aromatic amorphous copolyamide is Grivory G 21® (EMS) having specific gravity 1.18 g/ cm$^3$ and glass transition temperature (Tg) of 125°C. Typical characteristic of this product in comparison with other copolyamides and with PA 6 and PA 12 polyamides is given by the fact that the gas barrier properties improve by effect of the increasing environmental relative humidity.

Another type of Polyamide is PA 6/ 66 co-polymer containing semi-aromatic amorphous polyamide. This is obtained by inserting, in the polyamide molecules, in place of the linear segments (CH2), some more complex segments (e.g. ter- or isophthalic acids or cyclical diamides). A main feature of this polyamide is that it is not hygroscopic. A brand of co-polyamide 6/66 is Ultramid C 35 F Q 90® (BASF) with a density of 1.120 g/ cm$^3$ and a melting point of 195°C.

Another amorphous type of Polyamide is Nylon 6 I/ 6 T obtained by condensation of the hexamethylene diamine, terephthalic acid and isophthalic acid in a such way that 65-80% of the polymeric units are derived from isophthalamide hexamethylene.

The main characteristics of Nylon 6 I/6 T are a predominantly amorphous state, low hygroscopicity and a high "melt strength", which allows its orientation in a broad field of operating conditions.

A brand of PA 6 I/ 6 T is Selar PA 3426® (Du Pont) with a density of 1.19 g/ cm$^3$ and a glass transition temperature of 127°C.

The term co-polymer ethylene alpha-olefine refers to co-ethylene polymers with one or more alpha-olefines of C4 to C12 type, preferably chosen in the group that includes linear co-polymers or ter-polymers of ethylene with 1-butylene, 4 methyl-1-pentane, 1-hexene or 1-octene. In particular, a linear low density polyethylene is used (LLDPE) with co-monomer C8 and with a density of between 0.915 and 0.925 g/ cm$^3$.

Commercial brands of this product are Dowlex NG 5056® (Dow Chemical) and Clearflex FG 368® (Polimeri Europa) both with a melt index of 1 g/ 10 min. (190°C/ 2.16kg).

Those with densities of between 0.926 and 0.941 g/cm3 are considered as linear medium density polyethylene LMDPE, while those with a density of less than 0.915 g/cm3 are considered as linear very low density polyethylenes VLDPE.

The terminology used above also includes the so-called "metallocenes", linear polyethylenes, obtained by a process known as "single site" polymerization or of limited structure.

The term co-polymer ethylene vinyl-acetate (EVA) means a co-polymer formed by ethylene monomers and vinyl acetate, in which the ethylene units are more numerous. Usually a co-polymer is used with a percentage of vinylacetate between 9 and 15%, a density of 0.93 g/ cm3, a melt index of between 2 and 5 g/ 10 min. and a melting point of between. 95 and 105°C.

A type of EVA used is Elvax 3135 X® (Du Pont).

The term adhesive resins means co-polymers obtained from ethylene and acrylic acid. The polar bonds reduce crystallization and lead to an ionic cross-linking.

A commercial type of ionomeric resin is Surlyn 1652® (Du Pont) with a melt index of 5.2 g/ 10 min. (190°C/ 2.16 kg) and a melting point of 100°C.

The term adhesive resins is used to describe extrudable polymers which, because of their polar characteristics tend to bind themselves to other polymer types. The following are used in particular:

EAA (ethylenealkyl acrylate) co-polymer in which the ethylene forms the predominant part, as regards alkyl acrylate,
EEA (ethylene ethyl acrylate),
EBA (ethylene butyl acrylate),
EMA (ethylene methyl acrylate).

An EMA type resin is preferably used, with the commercial name of Nucrel 1202 HC® (Du Pont), containing 12% of methacrylic acid, a melt index of 1.5 (190°C/2.16kg) and a melting point of 99°C. Alternatively, it is possible to use, as adhesive, the Admer QB 520® type (Mitsui Chemical) with a melt index of 1.8, a density of 0.90 and a melting point of 160°C.

The term "antiblock" is used to describe a type of additive which, when added to the base polymer present in the surface layers, helps the sliding contact with external surfaces. It is therefore used during the product application stage, to make it sufficiently smooth running on the machines using the same film.

A very widespread product for this purpose is micronized amorphous silica with a particle size of <5 μm.

The so-called master blends or batches are used in which the said silica is dispersed in a base polymer suitable for dispersion in the polymer to be added. Base resins are usually of polyolefines with a high melt index.

In particular, an antiblock master batch which is used is the AB type 6001® (Constab) that could be dispersed on a PP or LDPE matrix at a ratio of approximately 5% in weight.

The term "sliding" is used to describe a type of additive which, when added to internal or surface layers, increases slipperiness, particularly on the metallic surfaces.

Certain amides, such as erucic amide, are particularly effective as they have a tendency to migrate to the surface of the final product and thus can be added in the more internal layers. Also in this case, the proximate principle is dispersed in master batches on polyolefinic based resins.

The GL type 5005® (Constab), dispersed on an LDPE or PP matrix, was used as sliding master batch.

The film, according to the present invention, consists of a multilayer coextruded structure, which is heat-shrinkable, sealable, with good optic characteristics of transparency and gloss and good adhesion of the same layers. These properties, the listing of which is not to be considered limitative, define in particular a film fit for the packing of food products in that it satisfies the following characteristics which are normally required for this use:

- protection from the surrounding environment
- low transmission of oxygen and water vapour
- mechanical resistance of the wrapping to tearing and the action of sharp objects
- sealability of the wrapping

- seal strength
- good presentation of the packed product.

Due to these characteristics, the film of the invention could be advantageously utilised for packing both food and non-food products, or turned into bags.

The following examples are provided for illustrative purposes of the invention.

EXAMPLE 1

A biaxially oriented heat-shrinkable coextruded film having seven layers, respectively A/B/C/D/C/B/A, has been prepared.

The core barrier layer (D) consisted of the semi-aromatic amorphous copolyamide resin Grivory G 21® produced by EMS having a glass transition temperature of 125°C.

Starting from the outside, the stratification was as follows:

At the surface was a layer (A) of ter-polymer of polypropylene (PP) of the type Adsyl SC 37F® (Montell) with the addition of 1% in weight of antiblocking master batch AB 6001 pp® (Constab).

The intermediate layer (B) was made by an heterophasic nucleated copolymer ethylene-propylene type Adflex Q 100 F® having apparent gravity 0.89 g/cm$^3$ and melt index 0.6 g/10 min (230°C/2.16 kg), added with 3% in weight of slip agent type GL 5005 pp® (Constab).

The two adhesive resins layers (C) were made up of a blend of 70% of EVA Elvax type 3135 AX® (Du Pont) with 30% of EMA Nucrel type 1202® (Du Pont).

The thickness ratio in the symmetrical structure A/B/C/D/C/B/A was as follows:

each layer A 25%, each layer B 10%, each layer C 5% and layer D 20% of the total thickness.

For the film preparation, a 5-extruder system was used with the following distribution:

- Extruder No. 1= Internal A Layer,
- Extruder No. 2= Both B layers,
- Extruder No. 3= Both C layers,
- Extruder No. 4= Barrier layer D,
- Extruder No. 5= External A layer.

The processing temperatures were between 190 to 200°C on extruders 1, 2, 3 and 5 and from 250 to 260°C on extruder 4. The set temperature on the coextrusion head dropped from 245 to 235°C. The cooling water of the primary tubular had a temperature of approximately 35°C. The temperature in the 5 zones of the orientation tunnel varied between 400 and 100°C.

More in detail the temperature gradient set in the different zones of the orientation oven was zone 1: 400°C/zone 2: 360°C/zone 3: 250°C/zone 4: 150°C/zone 5: 100°C.

The corresponding temperatures measured on the film in the different zones were:

zone 1: 138°C/zone 2: 138°C/zone 3: 120°C/zone 4: 75°C/zone 5: 70°C.

The primary tubular thickness was approximately 750μ. The tubular stretch ratios during orientation were 1: 5.5 in lengthwise direction, 1: 5.5 in crosswise direction.

The finished film had a total thickness of approximately 25μm.

The characteristics are contained in Table 1, which also contains the characteristics of the examples 2 to 11.

EXAMPLE 2

The Example 1 has been repeated by changing the terpolymer in layer A with the heterophasic nucleated copolymer of layer B added with antiblocking masterbatch

Constab AB 6001 pp® instead of the slip masterbatch GL 5005pp® (Constab).

EXAMPLE 3

Example 1 was repeated by substituting the B layers with an LLDPE/EVA (90/10) blend.

EXAMPLE 4 (comparison)

Example 3 was repeated by substituting the A layers with an LLDPE/EVA (90/10) blend.

EXAMPLE 5

Example 1 was repeated by using the adhesive Admer QB520® (Mitsui) for the C layers.

EXAMPLE 6

Example 1 was repeated by using, for the central barrier layer D, a blend consisting of PA6/ 66 (co-polymer) /PA 6I/6T (amorphous) / ionomer (Surlyn)®, in a ratio of 70/20/10.

EXAMPLE 7

A 5-layer film A/C/D/C/A made up as follows:

Layer A: ter-polymer PP Adsyl 5C 37 F®,
Layer C: Adhesive composed of EVA/ Nucrel® (70/30),
Layer D: Polyamide type Grivory 21®,
Layer C: Adhesive composed of EVA/Nucrel® (70/30),
Layer A: ter-polymer PP Adsyl 5C 37 F®.

EXAMPLE 8

Example 7 has been repeated by using in the layer A a blend of said terpolymer and heterophasic nucleated copolymer ethylene-propylene with ratio 70/30 in weight.

EXAMPLE 9 (comparison)

Example 8 was repeated by using an LLDPE/LDPE (90/10) blend for the A layer.
In this case the tubular stretch ratios during biaxial orientation are 1:4.7 in lengthwise direction (MD) and 1: 4.5 in crosswise direction (TD).

EXAMPLE 10

Example 7 was repeated by using the adhesive Admer QB520® (Mitsui) for the C layer.

EXAMPLE 11

Example 7 was repeated by using, for the D layer, a PA 6/66 co-polymer/PA6I/6T amorphous polyamide /ionomer blend, in a ratio of: 70/20/10.

## TABLE 1

| Characteristic | Unit of measure-ment | Example No. 1 | Example No. 2 | Example No. 3 | Example No. 5 | Example No. 6 | Comparison No. 4 |
|---|---|---|---|---|---|---|---|
| | | 7 layers | 7 layers | 7 layers | 7 layers | 7 layers | 7 layers |
| Thickness | μm | 25 | 25 | 25 | 25 | 25 | 25 |
| Stretch ratio | MD | 1:5.2 | 1:5.0 | 1:4.8 | 1:5.2 | 1:5.4 | 1:4.8 |
| | TD | 1:5.6 | 1:5.3 | 1:5.0 | 1:5.6 | 1:5.5 | 1:4.6 |
| Tensile strength | MPa | 110 | 115 | 98 | 109 | 112 | 94 |
| Elongation at breack | % | 75 | 66 | 80 | 75 | 74 | 86 |
| Tear resistance | N | 0.147 | 0.137 | 0.127 | 0.147 | 0.137 | 0.108 |
| Seal resistance | N/cm | 11.28 | 11.57 | 10.40 | 11.18 | 11.18 | 8.92 |
| Oxygen permeability | ml/24hr. m$^2$.bar | 24 | 28 | 29 | 25 | 25 | 32 |
| Heat Shrink | % 120°C | 58 | 50 | 52 | 57 | 58 | 52 |
| Haze | % | 2.8 | 2.9 | 3.1 | 2.9 | 3.0 | 3.6 |
| Gloss | | 90 | 88 | 90 | 90 | 90 | 82 |

## TABLE 1 (continued)

| Characteristic | Unit of measure-ment | Example No. 7 5 layers | Example No. 8 5 layers | Example No. 10 5 layers | Example No. 11 5 layers | Comparison No. 9 5 layers |
|---|---|---|---|---|---|---|
| Thickness | µm | 25 | 25 | 25 | 25 | 25 |
| Stretch ratio | MD | 1:5.1 | 1:4.9 | 1:5.0 | 1:5.3 | 1:4.7 |
| | TD | 1:5.4 | 1:5.1 | 1:5.4 | 1:5.3 | 1:4.5 |
| Tensile strenght | Mpa | 114 | 120 | 113 | 110 | 92 |
| Elongation At break | % | 78 | 69 | 79 | 80 | 88 |
| Tear resistance | N | 0.127 | 0.147 | 0.127 | 0.127 | 0.098 |
| Seal resistance | N/cm | 11.08 | 11.28 | 10.98 | 10.98 | 9.02 |
| Oxygen permeability | Ml/24 hr m$^2$.bar | 24 | 28 | 25 | 23 | 32 |
| Heat Shrink | % 120°C | 60 | 51 | 58 | 59 | 52 |
| Haze | % | 2.7 | 2.9 | 2.8 | 2.9 | 3-5 |
| Gloss | | 90 | 87 | 90 | 90 | 81 |

## Claims

1. A multilayer heat-shrinkable not cross-linked plastic film biaxially oriented by the double bubble process, in which the various layers are arranged according to an A/B/C/D/C/B/A structure or to an A/C/D/C/A structure, **characterised in that**:'

   - the core layer D consists of a semi-aromatic and amorphous copolyamide resin or of a blend of copolyamides and amorphous polyamides;
   - the C layers consist of adhesive resins;
   - the B layers consist of a blend of copolymers and terpolymers or of LLDPE or of a blend of LLDPE with other alpha-olefines or with EVA, or of a heterophasic nucleated ethylene-propylene copolymer, and
   - the A layers consist of a blend of copolymers and terpolymers of different type with respect to the blend of the B layers, or of a heterophasic nucleated ethylene-propylene copolymer, wherein said copolymers are propylene polymers containing between 2 and 6% of ethylene groups randomly set in the structure and having a density of between 0.895 and 9.0 g/cm$^3$, a melt index of between 5 and 6 g/10 min (230°C/2.16 kg) and a melting point of between 130 and 135°C, said terpolymers are propylene polymers containing ethylene and butylene-1 groups and having a density of between 0.890 and 0.895 g/cm$^3$, a melt index of between 5 and 5.5 g/10 min (230°C/2.16 kg) and a melting point approximately of 135°C, and said blend of LLDPE has a melting point approximately of 120°C.

2. A film according to claim 1, **characterised in that** said core layer D consists of a semi-aromatic and amorphous copolyamide resin (Grivory G 21 B®) having a glass transition temperature (Tg) of 125°C.

3. A film according to claim 1, **characterised in that** said core layer D consists of a blend of amorphous polyamides and copolyamides with a melting point of between 190 and 240°C.

4. A film according to claim 1, **characterised in that** said different blends of copolymers and terpolymers of the layers A and B have a melting point of between 135 and 140°C.

5. A film according to claim 1, **characterised in that** said adhesive resins of the C layers consist of polymers selected from the group which includes ethylene ethyl acrylate, ethylene butyl acrylate and ethylene methyl acrylate.

6. A film according to claim 1, **characterised in that** its thickness is between 15 and 60μm with a thickness of the layers of the structure A/B/C/D/C/B/A in which the thickness of each layer A is between 10 and 30%, the thickness of each layer B is between 10 and 30%, the thickness of each layer C is between 5 and 10% and the thickness of layer D is between 5 and 30% of the total thickness of the film.

7. A film according to claim 1, **characterised in that** the stretch ratio, by the double bubble process, in both lengthwise and crosswise directions, is between 1: 5 and 1: 6.

8. Process for the preparation of the film as claimed in claim 1 comprising:

   extruding a primary tubular made up of the various layers;
   cooling by water said tubular upon exit from the extrusion head;
   heating in ovens with infrared radiation heating elements and
   inflating with compressed air for a biaxial orientation with the double bubble process,

   **characterized in that** the infrared radiators ovens are divided into different zones in such a way to produce a temperature gradient profile matching the stretching temperatures of each material composing the multilayer structure, from 400°C to 100°C.

## Patentansprüche

1. Eine heißschrumpfbare mehrschichtige, nicht quervernetzte Kunststofffolie, die in dem Doppelblasenprozess, in dem die verschiedenen Schichten in einer Abfolge der Form A/B/C/D/C/B/A oder A/C/D/C/A angeordnet werden, eine biaxiale Orientierung erhält, **gekennzeichnet dadurch, dass**:

   • die Kernschicht D aus einem gemischt aromatisch-aliphatischen, amorphen Copolyamidharz oder aus einer Mischung von Copolyamiden und amorphen Polyamiden besteht;
   • die Schichten C aus Klebharzen bestehen;
   • die Schichten B aus einer Mischung von Copolymeren und Terpolymeren oder aus LLDPE oder aus einer Mischung von LLDPE und anderen alpha-Olefinen oder EVA oder aus einem heterophasischen nukleierten Ethylen-Propylen-Copolymer bestehen, und
   • die Schichten A aus einer Mischung von Copolymeren und Terpolymeren, die von anderer Art als die Mischung der Schichten B ist, oder aus einem heterophasischen nukleierten Ethylen-Propylen-Copolymer bestehen, wobei die genannten Copolymere Propylen-Polymere sind, in deren Struktur ein Anteil von 2 bis 6 % an zufällig verteilen Ethylen-Gruppen enthalten ist, deren Dichte zwischen 0,895 und 9,0 g/cm$^3$ liegt, deren Schmelzindex zwischen 5 und 6 g/10 min (230°C/2,16kg) liegt und deren Schmelzpunkt zwischen 130 und 135°C liegt, wobei weiter die genannten Terpolymere Propylen-Polymere sind, die Ethylen- und 1-Butylen-Gruppen enthalten, deren Dichte zwischen 0,890 und 0,895 g/cm$^3$ liegt, deren Schmelzindex zwischen 5 und 5,5 g/10 min (230°C/2,16kg) liegt und deren Schmelzpunkt ungefähr bei 135°C liegt, und wobei schließlich die genannte Mischung von LLDPE einen Schmelzpunkt von ungefähr 120°C besitzt.

2. Eine Folie entsprechend Anspruch 1 **gekennzeichnet dadurch, dass** die genannte Kemschicht D aus einem gemischt aromatisch-aliphatischen, amorphen Copolyamidharz (Grivory G 21 B®) besteht, das eine Glasübergangstemperatur (Tg) von 125°C besitzt

3. Eine Folie entsprechend Anspruch 1 **gekennzeichnet dadurch, dass** die genannte Kernschicht D aus einer Mischung von amorphen Polyamiden und Copolyamiden besteht, deren Schmelzpunkt zwischen 190 und 240°C liegt

**4.** Eine Folie entsprechend Anspruch 1 **gekennzeichnet dadurch, dass** der Schmelzpunkt der genannten unterschiedlichen Mischungen von Copolymeren und Terpolymeren der Schichten A und B zwischen 135 und 140°C liegt.

**5.** Eine Folie entsprechend Anspruch 1 **gekennzeichnet dadurch, dass** die genannten Klebharze der Schicht C aus Polymeren bestehen, die aus der folgenden Gruppe stammen: Ethylen-Ethylacrylat, Ethylen-Butylacrylat und Ethylen-Methylacrylat.

**6.** Eine Folie entsprechend Anspruch 1 **gekennzeichnet dadurch, dass** ihre Dicke zwischen 15 und 60µm liegt, wobei die Dicke jeder Schicht A zwischen 10 und 30%, die Dicke jeder Schicht B zwischen 10 und 30%, die Dicke jeder Schicht C zwischen 5 und 10% und die Dicke der Schicht D zwischen 5 und 30% der Gesamtdicke der Folie ausmacht.

**7.** Eine Folie entsprechend Anspruch 1 **gekennzeichnet dadurch, dass** das durch den Doppelblasenprozess bedingte Gesamtlängenverhältnis sowohl in Längsrichtung als auch in Querrichtung zwischen 1:5 und 1:6 liegt.

**8.** Verfahren zur Herstellung der Folie entsprechend Anspruch 1, das die folgenden Schritte umfasst:

Strangpressen einer primären Röhre, die aus den verschiedenen Schichten besteht;
Kühlung der genannten Röhre durch Wasser beim Austritt aus dem Strangpresskopf;
Erwärmen in Öfen mit Infrarot-Heizelementen und
Aufblasen mit Druckluft, um in dem Doppelblasenprozess eine biaxiale Orientierung zu erreichen,

**gekennzeichnet dadurch, dass** die Infrarot-Strahlungsöfen in unterschiedliche Bereiche eingeteilt sind, so dass der Temperaturgradient ein Profil aufweist, das den Recktemperaturen eines jeden Materials der mehrschichtigen Struktur entspricht und zwischen 400°C und 100°C verläuft.

## Revendications

**1.** Film plastique multicouche thermorétrécissable non-réticulé orienté biaxialement par un procédé de bulle double, dans lequel les différentes couches sont arrangées selon une structure A/B/C/D/C/B/A ou une structure A/C/D/C/A, **caractérisé en ce que** :

la couche centrale D consiste en une résine copolyamide semi-aromatique et amorphe ou en un mélange de copolyamides et polyamides amorphes ;
les couches C consistent en des résines adhésives ;
les couches B consistent en un mélange de copolymères et terpolymères ou de polyéthylène linéaire basse densité (LLDPE) ou un mélange de LLDPE avec d'autres alpha-oléfines ou avec de l'éthylène vinyle acétate (EVA), ou d'un copolymère éthylène-propylène nucléé en phase hétérogène, et
les couches A consistent en un mélange de copolymères et de terpolymères de différents types en rapport avec le mélange des couches B, ou d'un copolymère éthylène-propylène nucléé en phase hétérogène, dans lesquelles lesdits copolymères sont des polymères propylène contenant entre 2 et 6% de groupes éthylène placés au hasard dans la structure et possédant une densité comprise entre 0,890 et 9 g/cm$^3$, un indice de fluidité compris entre 5 et 6 g/10 min (230°C/2,16 kg) et un point de fusion compris entre 130 et 135°C, lesdits terpolymères sont des polymères propylène contenant des groupes éthylène et butylène-1 et possédant une densité comprise entre 0,890 et 0,895 g/cm$^3$, un indice de fluidité compris entre 5 et 5,5 g/10 min (230°C/2,16 kg) et un point de fusion d'approximativement 135°C, et ledit mélange de LLDPE possède un point de fusion d'approximativement 120°C.

**2.** Film selon la revendication 1, **caractérisé en ce que** ladite couche centrale D consiste en une résine copolyamide semi-aromatique et amorphe (Grivory G 21 B®) possédant une température de transition vitreuse (Tg) de 125°C.

**3.** Film selon la revendication 1, **caractérisé en ce que** ladite couche centrale D consiste en un mélange de polyamides amorphes et de copolyamides avec un point de fusion compris entre 190 et 240°C.

4. Film selon la revendication 1, **caractérisé en ce que** lesdits différents mélanges de copolymères et terpolymères des couches A et B possèdent un point de fusion compris entre 135 et 140°C.

5. Film selon la revendication 1, **caractérisé en ce que** lesdites résines adhésives des couches C consistent en des polymères sélectionnés parmi le groupe qui comprend l'éthylène acrylate d'éthyle, l'éthylène acrylate de butyle, et l'éthylène acrylate de méthyle.

6. Film selon la revendication 1, **caractérisé en ce que** son épaisseur est comprise entre 15 et 60 μm avec une épaisseur des couches de la structure A/B/C/D/C/B/A, dans laquelle l'épaisseur de chaque couche A est comprise entre 10 et 30%, l'épaisseur de chaque couche B est comprise entre 10 et 30%, l'épaisseur de chaque couche C est comprise entre 5 et 10% et l'épaisseur de la couche D est comprise entre 5 et 30% de l'épaisseur totale du film.

7. Film selon la revendication 1, **caractérisé en ce que** le rapport d'étirement, par le procédé de bulle double, à la fois dans la direction longitudinale et diagonale, est compris entre 1:5 et 1:6.

8. Procédé pour la préparation du film comme revendiqué dans la revendication 1, comprenant :

   l'extrusion d'un tube primaire composé des différentes couches ;
   le refroidissement par de l'eau dudit tube jusqu'à la sortie depuis la tête d'extrusion ;
   le chauffage dans des fours avec des éléments chauffant à radiations infrarouges et
   le gonflage avec de l'air comprimé pour une orientation biaxiale avec le procédé de bulle double,

   **caractérisé en ce que** les fours à radiateurs infrarouges sont divisés en différentes zones de telle manière à produire un profil de gradient de température recouvrant les températures d'étirement de chacun des matériaux composant la structure multicouche, de 400°C à 100°C.